# FASCICULE DE BREVET EUROPEEN

(11) **EP 4 406 392 B1**
(45) Date de publication et mention de la délivrance du brevet: **12.11.2025**
(21) Numéro de dépôt: 24153818.0
(22) Date de dépôt: 25.01.2024
(51) Int. Cl.: A01B 3/46, A01B 15/14

(54) **CHARRUE AVEC TÊTE D'ATTELAGE À ROTATION LIMITÉE**
PFLUG MIT BEGRENZT DREHBAREM ANBAUKOPF
PLOUGH WITH LIMITED ROTATION HEADSTOCK

(30) Priorité: 26.01.2023 FR 2300725
(43) Date de publication de la demande: 31.07.2024
(73) Titulaire: Kuhn-Huard S.A.S, 44110 Chateaubriant (FR)
(72) Inventeur: GAUTRON, Herrman, 44670 SAINT JULIEN DE VOUVANTES (FR); DUCROQUET, Frédéric, 44110 VILLEPOT (FR); HERAULT, Vincent, 44470 MAUVES SUR LOIRE (FR)
(74) Mandataire: Hager, Esther Evelyne

(56) Documents cités:
- FR-A1- 2 617 365
- FR-A1- 2 651 637

## Description

La présente invention concerne le domaine du machinisme agricole, en particulier des charrues portées, notamment celles comportant une tête d'attelage dite oscillante ou à palonnier. Dans ce contexte, l'invention porte sur une charrue du type précité présentant un comportement amélioré au travail.

Une charrue portée forme avec le tracteur, en configuration de travail, un ensemble rigide grâce au dispositif d'attelage trois points. Ainsi, quand la charrue travaille, tout se passe comme si elle était tirée à partir du point de convergence, c'est-à-dire du point de rencontre de la barre supérieure d'attelage et des barres inférieures d'attelage.

Pour que l'ensemble tracteur-charrue soit équilibré et progresse de manière bien droite pour assurer un labour rectiligne, l'utilisateur effectue préalablement un réglage de déport qui consiste en un déplacement latéral du bâti supportant les corps de labour et un réglage du dévers pour aligner les corps de labour par rapport au sens d'avancement ou direction d'avance de la charrue.

Si le réglage du dévers est correctement effectué, le tracteur avance droit sans contrainte (son volant reste facile à manœuvrer) et l'usure des contreseps est minimale puisque les efforts de frottement latéraux sont réduits.

Dans ce cas, la barre supérieure de l'attelage trois points est alignée avec la direction d'avance du véhicule tracteur et la résultante des forces appliquées au tracteur (au point de convergence) et la résultante des forces résistives de la charrue sont toutes deux alignées avec cette barre supérieure.

Certaines charrues portées sont dotées d'une traverse d'attelage mobile (ou oscillante) autorisant une translation et/ou une rotation de la partie arrière pour la configuration de transport. La translation permet d'augmenter la distance entre la charrue et le tracteur pour réduire les rayons de braquage et par conséquent autoriser une rotation de +/-35° de la traverse d'attelage.

Une charrue de ce type est par exemple connue du document FR 2 651 637.

Une telle charrue comprend un bâti portant au moins un corps de labour et pourvu d'une tête d'attelage pour sa liaison avec un dispositif d'attelage trois points d'un véhicule tracteur, la tête d'attelage comprenant, d'une part, une traverse d'attelage comportant à ses deux extrémités opposées des points d'attache destinés à venir en engagement avec les deux points d'attelage inférieurs du dispositif d'attelage trois points, et, d'autre part, une platine solidaire ou faisant partie du bâti, la traverse étant reliée de manière articulée à la platine avec guidage en translation et en rotation par l'intermédiaire d'une liaison pivot / glissière, l'axe du pivot étant positionné perpendiculairement au plan de la platine et la glissière s'étendant sensiblement parallèlement à ce plan et à la direction d'avance.

Lors du labour, la traverse d'attelage est bloquée par des moyens de verrouillage adéquats (verrous mobiles, tourillons, ...) dans une position perpendiculaire à la direction d'avance, pour réaliser un labour rectiligne : il n'y a donc pas de degré de liberté dans la configuration de travail.

Même s'il est bien vu que les bandes de labour soient bien droites, la(es) dernière(s) bande(s) de labour n'est (ne sont) que rarement rectiligne(s). Pour terminer le travail dans le champ, l'ensemble rigide devra donc suivre une trajectoire aléatoire, plus ou moins curviligne. Il s'agit en quelque sorte de désaligner l'axe de traction de la charrue du centre de traction (point de convergence) du tracteur. Cet exercice n'est pas simple puisque le chauffeur est contraint de contrebraquer les roues pour forcer le tracteur à sortir de sa ligne pour suivre une trajectoire non rectiligne correspondant à la limite du champ. Il s'ensuit une usure prématurée des contreseps, une hausse de la consommation de carburant et une fatigue accrue du chauffeur.

La même situation se présente, avec les mêmes inconvénients, en présence d'un obstacle présent dans le champ à labourer.

La présente invention a pour but principal de pallier ces inconvénients.

A cet effet, elle a pour objet une charrue du type précité qui est caractérisée en ce que la platine comprend des moyens configurés pour bloquer le déplacement en translation du pivot dans la glissière selon la direction d'avance et simultanément autoriser une rotation limitée de la traverse autour de l'axe du pivot, lorsque la charrue est soumise à une force de traction suivant la direction d'avance par l'intermédiaire de la traverse, les moyens de blocage de blocage en translation avec rotation limitée du pivot sont arrangés et configurés pour limiter la liberté de rotation de la traverse à un angle (β) d'environ +/- 15°.

L'invention sera mieux comprise grâce à la description ci-après, qui se rapporte à des modes de réalisation préférés, donnés à titre d'exemples non limitatifs et expliqués avec référence aux dessins schématiques annexés, dans lesquels :
[Fig. 1] est une vue en élévation latérale d'une charrue selon l'invention en configuration de labour ;
[Fig. 2A] et [Fig. 2B] sont des vues en perspective selon deux directions différentes d'un ensemble potence/tête d'attelage faisant partie de la charrue de la figure 1, selon un mode de réalisation de l'invention ;
[Fig. 3] est une vue en perspective d'une partie de la tête d'attelage faisant partie de l'ensemble représenté sur les figures 2 ;
[Fig. 4] est une vue de dessus de la tête d'attelage de la figure 3 dans une configuration de transport de la charrue (avec le pivot logé dans le site d'engagement du moyen d'accrochage), montrant que la traverse d'attelage est mobile en rotation d'un angle α (ici environ +/- 35°) entre une position perpendiculaire à la direction d'avance (trait plein) et une position inclinée maximale (traits discontinus), et inversement ;
[Fig. 5] est une vue simplifiée de dessus de la tête d'attelage représentée à la figure 4 (le moyen d'accrochage n'étant pas représenté), la charrue et la tête d'attelage étant en configuration de travail et la traverse étant en appui contre les butées arrière (le moyen de blocage a été positionné par le levier de manœuvre en position active, dans laquelle il est apte à bloquer la translation vers l'avant du pivot par la mise en place d'un arrêt à faible distance de l'extrémité arrière de la glissière) ;
[Fig. 6] est une vue similaire à la figure 5 de la tête d'attelage en configuration de travail, le pivot étant logé dans le site d'accrochage du moyen de blocage et la traverse d'attelage pouvant pivoter en rotation d'un angle β (avec β < α), en s'écartant de l'une des deux butées arrière, et
[Fig. 7] est une vue similaire à celle de la figure 5 illustrant un autre mode de réalisation de la tête d'attelage (moyen d'accrochage et crochet de blocage formés par le même élément).

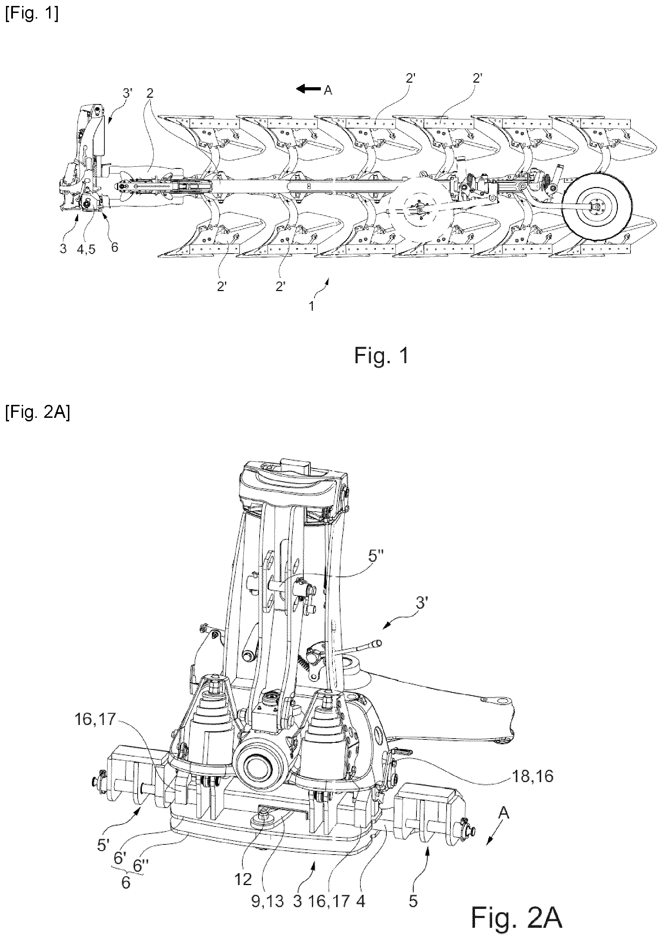

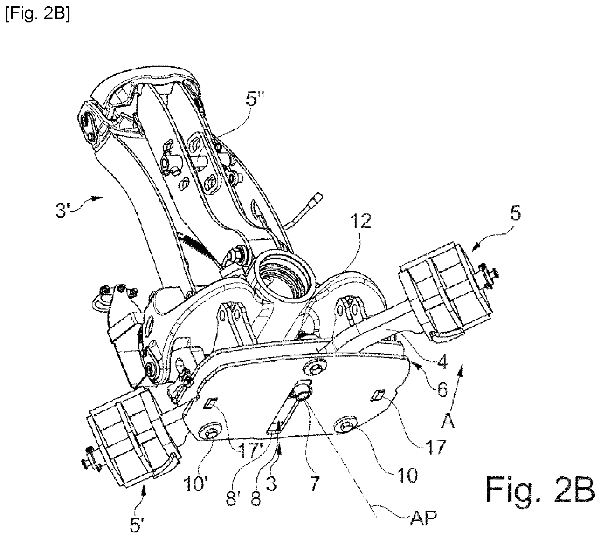

La figure 1 et partiellement les figures 2 à 7 montrent une charrue (1) destinée à être déplacée selon une direction d'avance (A) en configuration de travail et comprenant un bâti (2) portant au moins un corps de labour (2') et pourvu d'une tête d'attelage (3) pour sa liaison avec un dispositif d'attelage trois points d'un véhicule tracteur. La charrue (1) représentée sur la figure 1 est une charrue portée. La charrue est réversible, elle comporte des groupes de corps de labour (2').

La tête d'attelage (3) comprend quant à elle, d'une part, une traverse d'attelage (4) comportant à ses deux extrémités opposées des points d'attache (5, 5') destinés à venir en engagement avec les deux points d'attelage inférieurs du dispositif d'attelage trois points et, d'autre part, une platine (6) solidaire ou faisant partie du bâti (2). La traverse (4) est reliée de manière articulée à la platine (6) avec guidage en translation et en rotation par l'intermédiaire d'une liaison pivot (7) / glissière (8), l'axe (AP) du pivot (7) étant positionné perpendiculairement au plan de la platine (6) et la glissière (8) s'étendant sensiblement parallèlement à ce plan et à la direction d'avance (A).

Conformément à l'invention, la platine (6) comprend des moyens (9, 10, 10') configurés pour bloquer le déplacement en translation du pivot (7) dans la glissière (8) selon la direction d'avance (A) et simultanément autoriser une rotation limitée de la traverse (4) autour de l'axe (AP) du pivot (7), lorsque la charrue (1) est soumise à une force de traction suivant la direction d'avance (A) par l'intermédiaire de la traverse (4). La rotation limitée de la traverse (4) autour de l'axe (AP) du pivot (7) est d'environ +/- 15°. De préférence, les moyens de blocage (9, 10, 10') de blocage en translation avec rotation limitée du pivot (7) sont arrangés et configurés pour limiter, par coopération mutuelle, la liberté de rotation de la traverse (4) à un angle (β) d'environ +/- 15°. La rotation de la traverse (4) autour du pivot (7) est limitée de l'angle (β) par rapport à un positionnement perpendiculaire de cette traverse (4) par rapport à la direction d'avance (A). Préférentiellement l'angle (β) est d'environ +/- 10°. Avec une rotation limitée de +/-10° pour la traverse (4), le contournement d'obstacles par la charrue est facilité.

Grâce à ces dispositions, autorisant une rotation limitée de la partie de bâti (2) portant les corps de labour (2') par rapport au tracteur, la charrue (1) peut réaliser un labour selon une trajectoire non-rectiligne.

En effet, du fait de la possibilité d'une rotation limitée, la charrue (1) peut travailler dans des courbes (accentuées) sans subir des efforts trop importants. La charrue (1) pourra assumer une position non alignée sur celle du tracteur pour notamment mieux suivre des contours d'un champ non rectiligne (curviligne) et/ou contourner un obstacle (pierres, rocs, poteaux ou pylônes). Ainsi, lorsque le tracteur décrit une trajectoire courbe, la charrue (1) aura tendance à pivoter en prenant la position particulière qui la soumettra à un effort minimal.

Afin de garantir une conduite de la charrue (1) suffisamment précise, tout en autorisant un désalignement suffisant pour l'autoriser à effectuer des trajectoires curvilignes, les moyens (9, 10, 10') de blocage en translation avec rotation limitée du pivot (7) sont avantageusement arrangés et configurés pour limiter, par coopération mutuelle, la liberté de rotation de la traverse (4) à un angle (β) d'environ +/- 15°, préférentiellement de +/- 10°, par rapport à un positionnement perpendiculaire de cette traverse (4) par rapport à la direction d'avance (A).

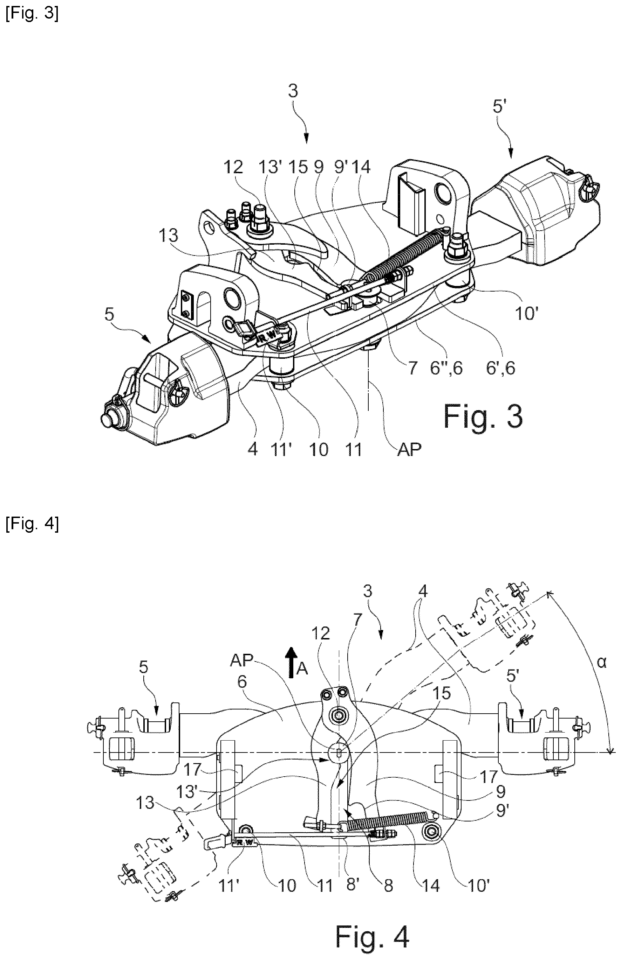

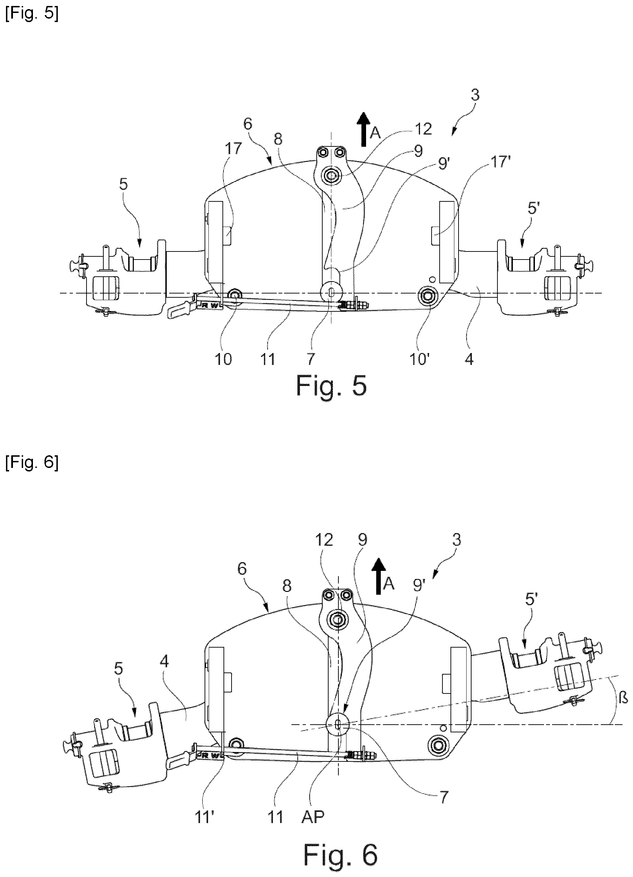

Pour permettre à l'utilisateur de pouvoir prendre une décision, en fonction des circonstances (travail en ligne droite ou travail en trajectoire curviligne), et comme le montrent les figures 3 à 7, la charrue (1) comprend préférentiellement un actionneur (11) commandant au moins l'un des moyens (9, 10, 10') de blocage en translation avec rotation limitée du pivot (7) et déterminant ainsi sélectivement la configuration de la liaison articulée entre la platine (6) et la traverse (4). Cet actionneur (11) permet, par exemple dans un premier état ou une première position (figures 5, 6 et 7), à l'utilisateur d'imposer une configuration dans laquelle la traverse (4) est, par le biais d'un formatage ou encadrement forcé particulier de la liaison pivot (7) / glissière (8), bloquée en translation avec une rotation limitée par rapport à la platine (6). Dans un second état ou une seconde position (figure 4), ce même actionneur (11) libère la liaison pivot (7) / glissière (8) de ce formatage ou encadrement. Toutefois, au moins un autre moyen (13) ou dispositif (16) peut être prévu pour limiter d'avantage la liberté de mouvement entre platine (6) et traverse (4), ce alternativement aux moyens (9, 10, 10') précités et en relation avec une autre configuration de la charrue (1).

En accord avec un mode de réalisation ressortant des figures 3 à 7, les moyens (9, 10, 10') de blocage en translation avec rotation limitée du pivot (7) comprennent, d'une part, un crochet (9) de blocage en translation avec un site de réception (9') pour le pivot (7) et, d'autre part, deux butées arrière (10 et 10') limitant le débattement rotatoire de la traverse (4) lorsque le pivot (7) est engagé dans le site (9').

Conformément à une construction pratique simple, robuste et fiable, le crochet (9) de blocage consiste en un bras pivotant dont le site de réception (9') peut être amené sélectivement au droit de la glissière (8) pour bloquer le déplacement en translation du pivot (7) dans la glissière (8) selon la direction d'avance (A) à son niveau (blocage en butée dans la direction d'avance (A) à une position donnée dans la glissière). La position en pivotement du bras pivotant est par exemple commandée par un actionneur (11), par exemple un levier à deux positions. De plus, les deux butées arrière (10 et 10') sont préférentiellement arrangées symétriquement de part et d'autre par rapport à l'axe longitudinal de la glissière (8) et forment un triangle isocèle avec le site de réception (9') lorsque ce dernier reçoit le pivot (7). Eventuellement, l'une des butées (10, 10') peut servir de site de verrouillage pour le levier (dans ses deux positions, ou alors être équipé d'un tel site (11'). Un moyen de signalement (R : route/W : travail) permet éventuellement à l'utilisateur d'identifier les deux positions du levier.

En relation avec la construction pratique précitée, il peut être prévu que le crochet (9) de blocage consiste en un bras monté pivotant sur la platine (6). Le crochet (9) est fixé à la platine (6), par une première extrémité, au niveau d'une butée avant (12) dans la direction d'avance (A). Le crochet (9) est solidaire d'un actionneur (11), par exemple un levier à deux positions, au niveau de son extrémité opposée.

Comme le montrent les figures 5 à 7, la position du blocage en translation du pivot (7) dans la glissière (8) selon la direction d'avance (A) est située à distance de l'extrémité arrière (8') de la glissière (8) selon cette direction (A). Dans cette position du pivot (7), la traverse (4) est située à distance des butées arrière (10, 10') et peut ainsi pivoter autour de l'axe du pivot (7) d'un angle (β) (de chaque côté de la perpendiculaire), jusqu'à venir en appui contre l'une de ces deux butées (10, 10').

Comme le montrent les figures 2, la charrue (1) peut être équipée d'un ensemble potence (3') /tête d'attelage (3), la tête d'attelage comportant avec la traverse (4) les deux points d'attache inférieurs (5, 5') et la potence intégrant le point d'attache supérieur (5").

En accord avec une variante de réalisation avantageuse, et notamment en relation avec la construction des figures 2 et comme illustré sur les figures 3, 4 et 7, la platine (6) comporte en outre un moyen (13) d'accrochage du pivot (7), avantageusement un bras pivotant avec un site d'engagement (13') pour le pivot (7). Le moyen (13) d'accrochage bloque la translation du pivot (7) dans la glissière (8) en direction de l'extrémité arrière (8') lorsque la traverse d'attelage (4) est soumise à un déplacement relatif selon la direction d'avance (A) par rapport à la platine (6).

Par le biais de ce moyen (13) d'accrochage escamotable par pivotement, l'invention permet de réaliser automatiquement une limitation (en longueur) de la possibilité de translation du pivot (7) dans la glissière (8). En particulier, durant les phases d'accélération et de décélération lors du transport, les chocs du pivot (7) contre l'extrémité arrière (8') sont totalement évités et les chocs contre l'extrémité avant de cette glissière sont au moins notablement réduits, ce en fonction du degré de liberté restant en translation laissé au pivot (7).

Un tel moyen (13) d'accrochage est décrit plus en détail dans la demande de brevet français n° 2109488 du 10 septembre 2021 au nom de la déposante, dont l'enseignement est incorporé à la présente par référence.

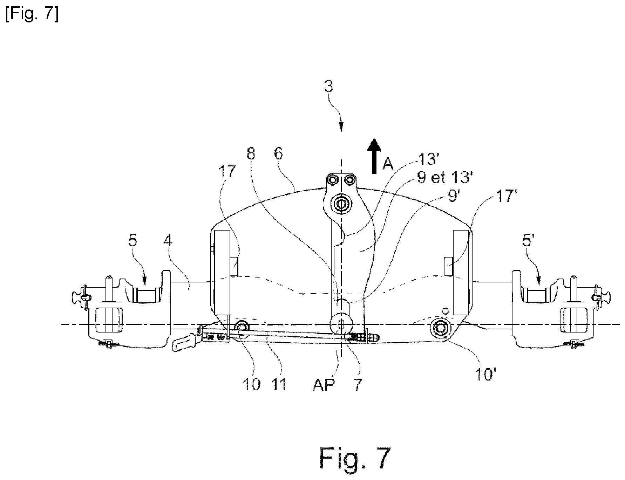

Le moyen (13) d'accrochage et le moyen (9) de blocage en translation peuvent être constitués par le même bras pivotant, pourvu à la fois d'un site de réception (9') et d'un site d'engagement (13') pour le pivot (7), comme le montre la figure 7. Le moyen (13) d'accrochage et le moyen (9) de blocage en translation peuvent être constitués par deux bras pivotants distincts différents, avantageusement solidarisés avec la platine (6) au niveau d'un même point de fixation (12), correspondant préférentiellement à une butée avant, comme le montrent les figures 3 et 4.

Préférentiellement, le moyen (13) d'accrochage du pivot (7) consiste en un bras pivotant, distinct du moyen (9) de blocage en translation sous forme de crochet. Le moyen (13) d'accrochage coopère avec un moyen (14) de sollicitation élastique qui réalise un engagement automatique du moyen (13) d'accrochage lorsque le pivot (7) se retrouve positionné dans la glissière (8), au-delà d'une distance déterminée par rapport à l'extrémité arrière (8') de la glissière selon la direction d'avance (A). Ce bras pivotant comporte avantageusement un profil de glissement (15) contre lequel vient en appui, sous la contrainte du moyen (14) de sollicitation élastique, le pivot (7) lorsqu'il n'est pas en engagement accrochant avec ce bras. Le profil de glissement (15) débouche dans le site (13') d'engagement accrochant pour le pivot (7), à l'une de ses extrémités, et s'étendant par son autre extrémité au-delà de l'extrémité arrière (8') de la glissière (8).

En accord avec une autre variante de réalisation avantageuse, et notamment en relation avec la construction des figures 2 et comme illustré partiellement sur les figures 3 à 7, la platine (6) comprend également un dispositif de verrouillage (16) à au moins deux verrous (17, 17') et à commande unique (18), configurés pour bloquer en position, en translation et en rotation la traverse d'attelage (4) par rapport à la platine (6), ce en coopération avec les butées arrière (10, 10'). Dans cette configuration, verrous (17, 17') engagés, la charrue (1) va former avec le tracteur un ensemble rigide et réaliser des bandes de labour plutôt rectilignes. Ce dispositif de verrouillage (16) comprend avantageusement une tringlerie de déplacement simultané et synchronisé des deux verrous (17, 17'), entrainée par un organe de commande unique (18), le dispositif de verrouillage (16) étant préférentiellement intégré constructivement et en totalité à la tête d'attelage (3). Sur les figures 3 à 7, seules les gaines de coulissement des verrous (17, 17') sont représentées, leurs emplacements correspondant toutefois à ces derniers.

Avec un tel dispositif de verrouillage (16), il est possible avec une manœuvre unique et sans avoir à manipuler de pièce séparée, de bloquer la traverse d'attelage (4) par rapport à la platine (6), en l'immobilisant entre les verrous (17, 17') et les butées (10, 10') dans une orientation perpendiculaire à la direction d'avance normale de la charrue (1). En outre, ce dispositif de verrouillage (16) faisant en totalité partie intégrante de la tête d'attelage (3), la contrainte de rangement de pièces et les risques de perte sont écartés.

Un tel dispositif de verrouillage (16) est décrit plus en détail dans la demande de brevet français n° 2109487 du 10 septembre 2021 au nom de la déposante, dont l'enseignement est incorporé à la présente par référence.

Bien que la platine (6) puisse être constituée par une plaque unique sur laquelle glisse la traverse d'attelage (4), l'invention prévoit avantageusement, comme le montrent les figures 3 à 7, qu'elle présente une structure à deux plaques (6' et 6") superposées, entre lesquelles est montée la traverse d'attelage (4). Cette traverse (4) est bloquée ou mobile avec limitation en mouvement entre ces plaques (6', 6") en fonction de la configuration du dispositif de verrouillage (16), du moyen (13) d'accrochage et bien entendu des moyens (9, 10, 10') de blocage en translation avec rotation limitée, dépendant de l'état de la charrue (1).

Les deux plaques (6', 6") sont mutuellement solidarisées entre elles avec espacement par des éléments d'entretoisement (10, 10', 12) formant préférentiellement butées avant et arrière pour la traverse (4) et chaque plaque comprend une découpe en forme de trou oblong allongé ou de fente constituant par coopération mutuelle la glissière (8), aboutissant à un double guidage du pivot (7).

## Revendications

1. Charrue (1) destinée à être déplacée selon une direction d'avance (A) en configuration de travail et comprenant un bâti (2) portant au moins un corps de labour (2') et pourvu d'une tête d'attelage (3) pour sa liaison avec un dispositif d'attelage trois points d'un véhicule tracteur, la tête d'attelage (3) comprenant, d'une part, une traverse d'attelage (4) comportant à ses deux extrémités opposées des points d'attache (5, 5') destinés à venir en engagement avec les deux points d'attelage inférieurs du dispositif d'attelage trois points et d'autre part, une platine (6) solidaire ou faisant partie du bâti (2), la traverse (4) étant reliée de manière articulée à la platine (6) avec guidage en translation et en rotation par l'intermédiaire d'une liaison pivot (7) / glissière (8), l'axe (AP) du pivot (7) étant positionné perpendiculairement au plan de la platine (6) et la glissière (8) s'étendant sensiblement parallèlement à ce plan et à la direction d'avance (A), **caractérisée en ce que** la platine (6) comprend des moyens (9, 10, 10') configurés pour bloquer le déplacement en translation du pivot (7) dans la glissière (8) selon la direction d'avance (A) et simultanément autoriser une rotation limitée de la traverse (4) autour de l'axe (AP) du pivot (7), lorsque la charrue (1) est soumise à une force de traction suivant la direction d'avance (A) par l'intermédiaire de la traverse (4), les moyens de blocage (9, 10, 10') de blocage en translation avec rotation limitée du pivot (7) sont arrangés et configurés pour limiter la liberté de rotation de la traverse (4) à un angle (β) d'environ +/- 15°.

2. Charrue (1) selon la revendication 1, **caractérisée en ce que** les moyens (9, 10, 10') de blocage en translation avec rotation limitée du pivot (7) sont arrangés et configurés pour limiter, par coopération mutuelle, la liberté de rotation de la traverse (4) à un angle (β) d'environ +/- 15°, préférentiellement de +/- 10°, par rapport à un positionnement perpendiculaire de cette traverse (4) selon la direction d'avance (A).

3. Charrue (1) selon la revendication 1 ou 2, **caractérisée en ce qu'**elle comprend un actionneur (11) commandant au moins l'un des moyens (9, 10, 10') de blocage en translation avec rotation limitée du pivot (7) et déterminant ainsi sélectivement la configuration de la liaison articulée entre la platine (6) et la traverse (4).

4. Charrue (1) selon l'une quelconque des revendications 1 à 3, **caractérisée en ce que** les moyens (9, 10, 10') de blocage en translation avec rotation limitée du pivot (7) comprennent, d'une part, un crochet (9) de blocage en translation avec un site de réception (9') pour le pivot (7) et d'autre part, deux butées arrière (10 et 10') limitant le débattement rotatoire de la traverse (4) lorsque le pivot (7) est engagé dans le site (9').

5. Charrue (1) selon la revendication 4, **caractérisée en ce que** le crochet (9) de blocage consiste en un bras pivotant, dont le site de réception (9') peut être amené sélectivement au droit de la glissière (8) pour bloquer le déplacement en translation du pivot (7) dans la glissière (8) selon la direction d'avance (A), la position en pivotement du bras pivotant étant commandée par un actionneur (11).

6. Charrue selon l'une quelconque des revendications 4 et 5, **caractérisée en ce que** le crochet (9) de blocage consiste en un bras monté pivotant sur la platine (6) et fixé à cette dernière, par une première extrémité, au niveau d'une butée avant (12) pour la traverse (4) dans la direction d'avance (A), le crochet (9) étant solidaire d'un actionneur (11) au niveau de son extrémité opposée.

7. Charrue (1) selon l'une quelconque des revendications 1 à 6, **caractérisée en ce que** la position de blocage en translation du pivot (7) dans la glissière (8) selon la direction d'avance (A) est située à distance de l'extrémité arrière (8') de la glissière (8) selon cette direction (A).

8. Charrue (1) selon l'une quelconque des revendications 1 à 6, **caractérisée en ce que** la platine (6) comporte en outre un moyen (13) d'accrochage bloquant la translation du pivot (7) dans la glissière (8) en direction de l'extrémité arrière (8') lorsque la traverse d'attelage (4) est soumise à un déplacement relatif selon la direction d'avance (A) par rapport à la platine (6), le moyen (13) d'accrochage et le moyen (9) de blocage en translation étant constitués par le même bras pivotant, pourvu à la fois d'un site de réception (9') et d'un site d'engagement (13') pour le pivot (7), ou par deux bras pivotants distincts différents, solidarisés avec la platine (6) au niveau d'un même point de fixation (12).

9. Charrue (1) selon la revendication 8, **caractérisée en ce que** le moyen (13) d'accrochage du pivot (7) consiste en un bras pivotant, distinct du moyen (9) de blocage en translation sous forme de crochet, et coopère avec un moyen (14) de sollicitation élastique qui réalise un engagement automatique du moyen (13) d'accrochage avec le pivot (7) lorsque ce dernier se retrouve positionné dans la glissière (8), au-delà d'une distance déterminée par rapport à l'extrémité arrière (8') de la glissière selon la direction d'avance (A), ce bras pivotant (13) comportant un profil de glissement (15) contre lequel vient en appui, sous la contrainte du moyen de sollicitation élastique (14), le pivot (7) lorsqu'il n'est pas en engagement accrochant avec ce bras, le profil de glissement (15) débouchant dans le site (13') d'engagement accrochant pour le pivot (7), à l'une de ses extrémités, et s'étendant par son autre extrémité au-delà de l'extrémité arrière (8') de la glissière (8).

10. Charrue (1) selon la revendication 4 ou l'une quelconque des revendications 5 à 9, pour autant qu'elles se rattachent à la revendication 4, **caractérisée en ce que** la platine (6) comprend également un dispositif de verrouillage (16) à au moins deux verrous (17, 17') et à commande unique (18), configurés pour bloquer en position, en translation et en rotation, la traverse d'attelage (4) par rapport à la platine (6), ce en coopération avec les butées arrière (10, 10'), ce dispositif de verrouillage (16) comprenant une tringlerie de déplacement simultané et synchronisé des deux verrous (17, 17'), entrainée par un organe de commande unique (18), le dispositif de verrouillage (16) étant intégré constructivement et en totalité à la tête d'attelage (3).

11. Charrue selon l'une quelconque des revendications 1 à 10, **caractérisée en ce que** la platine (6) présente une structure à deux plaques (6', 6") superposées entre lesquelles est montée la traverse d'attelage (4), les deux plaques étant mutuellement solidarisées entre elles avec espacement par des éléments d'entretoisement (10, 10', 12) formant butées avant et arrière pour la traverse (4) et chaque plaque comprenant une découpe en forme de trou oblong allongé ou de fente constituant par coopération mutuelle la glissière (8).

## Patentansprüche

1. Pflug (1), der dazu bestimmt ist, in Arbeitsstellung in einer Vorschubrichtung (A) bewegt zu werden, und der einen Rahmen (2) umfasst, der mindestens einen Pflugkörper (2') trägt und mit einem Kupplungskopf (3) für seine Verbindung mit einer Dreipunkt-Kupplungsvorrichtung eines Zugfahrzeugs versehen ist, wobei der Kupplungskopf (3) umfasst einerseits einen Kupplungsquerträger (4) mit an seinen beiden gegenüberliegenden Enden Befestigungspunkten (5, 5'), die dazu bestimmt sind, mit den beiden unteren Kupplungspunkten der Dreipunkt-Kupplungsvorrichtung in Eingriff zu kommen, und andererseits eine Platte (6), die fest mit dem Rahmen (2) verbunden ist oder Teil davon ist, wobei der Querträger (4) gelenkig mit der Platte (6) verbunden ist und über eine Drehzapfen- (7)/ Gleitschienenverbindung (8) in Translation und Rotation geführt wird, wobei die Achse (AP) des Drehzapfens (7) senkrecht zur Ebene der Platte (6) positioniert ist und sich die Gleitschiene (8) im Wesentlichen parallel zu dieser Ebene und zur Vorschubrichtung (A) erstreckt,
**dadurch gekennzeichnet, dass** die Platte (6) Mittel (9, 10, 10') umfasst, die so konfiguriert sind, dass sie die Translationsbewegung des Drehzapfens (7) in der Gleitschiene (8) in Vorschubrichtung (A) blockieren und gleichzeitig eine begrenzte Drehung des Querträgers (4) um die Achse (AP) des Drehzapfens (7) ermöglichen, wenn der Pflug (1) über den Querträger (4) einer Zugkraft in Vorschubrichtung (A) ausgesetzt ist, die Mittel (9, 10, 10') zum Blockieren in Translation mit begrenzter Drehung des Drehzapfens (7) sind so angeordnet und konfiguriert, dass sie die Drehfreiheit des Querträgers (4) auf einen Winkel (β) von etwa +/- 15° begrenzen.

2. Pflug (1) nach Anspruch 1, **dadurch gekennzeichnet, dass** die Mittel (9, 10, 10') zum Blockieren in Translation mit begrenzter Drehung des Drehzapfens (7) so angeordnet und konfiguriert sind, dass sie durch gegenseitiges Zusammenwirken die Drehfreiheit des Querträgers (4) auf einen Winkel (β) von etwa +/- 15°, vorzugsweise von +/- 10°, in Bezug auf eine senkrechte Positionierung dieses Querträgers (4) zur Vorschubrichtung (A) begrenzen.

3. Pflug (1) nach Anspruch 1 oder 2, **dadurch gekennzeichnet, dass** er einen Aktuator (11) umfasst, der mindestens eines der Mittel (9, 10, 10') zum Blockieren der Translation mit begrenzter Drehung des Drehzapfens (7) steuert und so selektiv die Konfiguration der Gelenkverbindung zwischen der Platte (6) und dem Querträger (4) bestimmt.

4. Pflug (1) nach einem der Ansprüche 1 bis 3, **dadurch gekennzeichnet, dass** die Mittel (9, 10, 10') zum Blockieren in Translation mit begrenzter Drehung des Drehzapfens (7) umfassen einerseits einen Haken (9) zum Blockieren der Translation mit einer Aufnahmestelle (9') für den Drehzapfen (7) und andererseits zwei hinteren Anschläge (10 und 10'), die die Drehbewegung des Querträgers (4) begrenzen, wenn der Drehzapfen (7) in die Stelle (9') eingreift.

5. Pflug (1) nach Anspruch 4, **dadurch gekennzeichnet, dass** der Blockierungshaken (9) besteht aus einem Schwenkarm, dessen Aufnahmestelle (9') wahlweise in Richtung der Gleitschiene (8) gebracht werden kann, um die Translationsbewegung des Drehzapfens (7) in der Gleitschiene (8) entsprechend der Vorschubrichtung (A) zu blockieren, wobei die Schwenkposition des Schwenkarms durch einen Aktuator (11) gesteuert wird.

6. Pflug (1) nach einem der Ansprüche 4 und 5, **dadurch gekennzeichnet, dass** der Blockierungshaken (9) besteht aus einem Arm, der schwenkbar an der Platte (6) montiert und an dieser mit einem ersten Ende in Höhe eines vorderen Anschlags (12) für den Querträger (4) in Vorschubrichtung (A) befestigt ist, wobei der Haken (9) an seinem gegenüberliegenden Ende fest mit einem Aktuator (11) verbunden ist.

7. Pflug (1) nach einem der Ansprüche 1 bis 6, **dadurch gekennzeichnet, dass** die Position, in der der Drehzapfen (7) in Translation in der Gleitschiene (8) in Vorschubrichtung (A) blockiert ist, vom hinteren Ende (8') der Gleitschiene (8) in dieser Richtung (A) beabstandet ist.

8. Pflug (1) nach einem der Ansprüche 1 bis 6, **dadurch gekennzeichnet, dass** die Platte (6) außerdem ein Mittel (13) zum Einhängen des Drehzapfens umfasst, das die Translation des Drehzapfens (7) in der Gleitschiene (8) in Richtung des hinteren Endes (8') blockiert, wenn der Kupplungsquerträger (4) einer Relativbewegung in Vorschubrichtung (A) in Bezug auf die Platte (6) ausgesetzt ist, wobei das Einhängemittel (13) und das Mittel (9) zum Blockieren in Translation können aus demselben Schwenkarm bestehen, der sowohl mit einer Aufnahmestelle (9') als auch mit einer Eingriffsstelle (13') für den Drehzapfen (7) versehen ist, oder aus zwei verschiedenen, getrennten Schwenkarmen, die an einem gemeinsamen Fixierungspunkt (12) mit der Platte (6) verbunden sind.

9. Pflug (1) nach Anspruch 8, **dadurch gekennzeichnet, dass** das Einhängemittel (13) des Drehzapfens (7) aus einem Schwenkarm besteht, unterschiedlich von dem Mittel (9) zum Blockieren in Translation in Form eines Hakens, und mit einem elastischen Vorspannmittel (14) zusammenwirkt, das ein automatisches Eingreifen des Einhängemittels (13) mit dem Drehzapfen (7) bewirkt, wenn dieser über einen bestimmten Abstand vom hinteren Ende (8') in der Gleitschiene in Vorschubrichtung (A) hinaus positioniert ist, wobei dieser Schwenkarm ein Gleitprofil (15) umfasst, an dem der Drehzapfen (7) unter der Kraft des elastischen Vorspannmittels (14) zur Anlage kommt, wenn er nicht mit diesem Arm in Eingriff steht, wobei das Gleitprofil (15) an einem seiner Enden in die Eingriffsstelle (13') für den Drehzapfen (7) mündet und sich mit seinem anderen Ende über das hintere Ende (8') der Gleitschiene (8) hinaus erstreckt.

10. Pflug (1) nach Anspruch 4 oder einem der Ansprüche 5 bis 9, soweit sie sich auf Anspruch 4 beziehen, **dadurch gekennzeichnet, dass** die Platte (6) auch eine Verriegelungsvorrichtung (16) mit mindestens zwei Riegeln (17, 17') und einer einzigen Steuerung (18) umfasst, die so konfiguriert sind, dass sie den Kupplungsquerträger (4) in Zusammenarbeit mit den hinteren Anschlägen (10, 10') in seiner Position, seiner Translation und seiner Drehung in Bezug auf die Platte (6) blockieren, wobei diese Verriegelungsvorrichtung (16) ein Gestänge zum gleichzeitigen und synchronisierten Verschieben der beiden Riegel (17, 17') umfasst, das von einem einzigen Steuerelement (18) angetrieben wird, wobei die Verriegelungsvorrichtung (16) vorzugsweise konstruktiv vollständig in den Kupplungskopf (3) integriert ist.

11. Pflug (1) nach einem der Ansprüche 1 bis 10, **dadurch gekennzeichnet, dass** die Platte (6) eine Struktur mit zwei übereinanderliegenden Platten (6' und 6") aufweist, zwischen denen der Kupplungsquerträger (4) angebracht ist, wobei die beiden Platten (6', 6") miteinander verbunden sind, mit Abstand durch Abstandselemente (10, 10', 12) die vordere und hintere Anschläge für den Querträger (4) bilden, und jede Platte einen Ausschnitt in Form eines länglichen Lochs oder Schlitzes aufweist, die durch gegenseitiges Zusammenwirken die Gleitschiene (8) bilden.

## Claims

1. Plough (1) designed to be moved in a direction of advance (A) in working configuration and comprising a frame (2) carrying at least one plough body (2') and provided with a coupling head (3) for connection to a three-point coupling device on a tractor vehicle, the coupling head (3) comprising, on the one hand, a coupling crossbar (4) having attachment points (5, 5') at its two opposite ends designed to engage with the two lower coupling points of the three-point coupling device, and, on the other hand, a plate (6) integral with or forming part of the frame (2), the crossbar (4) being connected in an articulated manner to the plate (6) with guidance in translation and rotation by means of a pivot (7)/slide (8) connection, the pivot (7) axis (AP) being positioned perpendicular to the plane of the plate (6) and the slide (8) extending substantially parallel to this plane and to the direction of advance (A),
**characterised in that** the plate (6) comprises means (9, 10, 10') configured to block the translational movement of the pivot (7) in the slide (8) in the direction of advance (A) and simultaneously allow limited rotation of the crossbar (4) around the pivot axis (AP) when the plough (1) is subjected to a traction force in the direction of advance (A) via the crossbar (4), the means (9, 10, 10') for blocking translational movement with limited rotation of the pivot (7) are arranged and configured to limit the freedom of rotation of the crossbar (4) to an angle (β) of approximately +/- 15°.

2. Plough (1) according to claim 1, **characterised in that** the means (9, 10, 10') for blocking in translation with limited rotation of the pivot (7) are arranged and configured to limit, by mutual cooperation, the freedom of rotation of the crossbar (4) to an angle (β) of approximately +/- 15°, preferably of +/- 10°, relative to a perpendicular position of this crossbar (4) with respect to the direction of advance (A).

3. Plough (1) according to claim 1 or 2, **characterised in that** it comprises an actuator (11) controlling at least one of the means (9, 10, 10') for blocking in translation with limited rotation of the pivot (7) and thus selectively determining the configuration of the articulated connection between the plate (6) and the crossbar (4).

4. Plough (1) according to any one of claims 1 to 3, **characterised in that** the means (9, 10, 10') for blocking in translation with limited rotation of the pivot (7) comprise, on the one hand, a hook (9) for blocking in translation with a receiving site (9') for the pivot (7) and, on the other hand, two rear stops (10 and 10') limiting the rotational movement of the crossbar (4) when the pivot (7) is engaged in the site (9').

5. Plough (1), according to claim 4, **characterised in that** the blocking hook (9) consists of a pivoting arm whose receiving site (9') can be selectively brought into alignment with the slide (8) to block the translational movement of the pivot (7) in the slide (8) in the direction of advance (A), the pivot position of the pivot arm being controlled by an actuator (11).

6. Plough (1) according to any one of claims 4 and 5, **characterised in that** the blocking hook (9) consists of an arm mounted pivotally on the plate (6) and fixed to the latter, by a first end, at a front stop (12) for the crossbar (4) in the direction of advance (A), the hook (9) being integral with an actuator (11) at its opposite end.

7. Plough (1) according to any one of claims 1 to 6, **characterised in that** the position of the blocking in translation of the pivot (7) in the slide (8) in the direction of advance (A) is located at a distance from the rear end (8') of the slide (8) in this direction (A).

8. Plough (1) according to any one of claims 1 to 6, **characterised in that** the plate (6) also comprises a hooking means (13) that blocks the translation of the pivot (7) in the slide (8) towards the rear end (8') when the coupling crossbar (4) is subjected to relative movement in the direction of advance (A) with respect to the plate (6), the hooking means (13) and the means (9) for blocking in translation being constituted by the same pivoting arm, provided with both a receiving site (9') and an engagement site (13') for the pivot (7), or by two separate pivoting arms, secured to the plate (6) at the same fixing point (12).

9. Plough (1) according to claim 8, **characterised in that** the means (13) for hooking the pivot (7) consists of a pivoting arm, separate from the means (9) for blocking in translation in the form of a hook, the hooking means (13) cooperating with an elastic biasing means (14) which automatically engages the hooking means (13) when the pivot (7) is positioned in the slide (8) beyond a predetermined distance from the rear end (8') of the slide in the direction of advance (A), this pivoting arm comprising a sliding profile (15) against which the pivot (7) comes to rest, under the force of the elastic biasing means (14), when it is not in engagement with this arm, the sliding profile (15) opening into the hooking engagement site (13') for the pivot (7) at one of its ends and extending beyond the rear end (8') of the slide (8) at its other end.

10. Plough (1) according to claim 4 or any one of claims 5 to 9 as long as they relate to claim 4, **characterised in that** the plate (6) also comprises a locking device (16) with at least two locks (17, 17') and a single control (18), configured to block the coupling crossbar (4) in position, in translation and in rotation relative to the plate (6), in cooperation with the rear stops (10, 10'), this locking device (16) comprising a linkage for the simultaneous and synchronised movement of the two locks (17, 17'), driven by a single control element (18), the locking device (16) being preferably integrated structurally and in its entirety into the coupling head (3).

11. Plough (1) according to any one of claims 1 to 10, **characterised in that** the plate (6) provides a structure with two superimposed plates (6' and 6"), between which the coupling crossbar (4) is mounted, the two plates being mutually secured to each other with spacing by spacer elements (10, 10', 12) that act as front and rear stops for the crossbar (4), and each plate having a cut-out in the shape of an elongated hole or slot that form the slide (8) when working together.
